# EUROPEAN PATENT SPECIFICATION

(11) **EP 3 110 506 B1**
(45) Date of publication and mention of the grant of the patent: **01.11.2023**
(21) Application number: 15755315.7
(22) Date of filing: 02.03.2015
(51) Int. Cl.: A61N 5/10, A61B 6/02, F24F 11/00, F24F 3/16, H04W 4/00

(54) **METHOD AND APPARATUS FOR ENSURING AIR QUALITY IN A BUILDING, INCLUDING METHOD AND APPARATUS FOR CONTROLLING A WORKING DEVICE USING A HANDHELD UNIT HAVING SCANNING, NETWORKING, DISPLAY AND INPUT CAPABILITY**
VERFAHREN UND VORRICHTUNG ZUR SICHERSTELLUNG DER LUFTQUALITÄT IN EINEM GEBÄUDE, EINSCHLIESSLICH DES VERFAHRENS UND DER VORRICHTUNG ZUR STEUERUNG EINER ARBEITSVORRICHTUNG MIT EINER TRAGBAREN EINHEIT MIT ABTASTUNGS-, VERNETZUNGS-, ANZEIGE- UND EINGANGSFÄHIGKEIT
PROCÉDÉ ET APPAREIL PERMETTANT DE GARANTIR LA QUALITÉ DE L'AIR DANS UN BÂTIMENT, COMPRENANT UN PROCÉDÉ ET UN APPAREIL POUR COMMANDER UN DISPOSITIF DE TRAVAIL À L'AIDE D'UNE UNITÉ À MAIN AYANT UNE CAPACITÉ DE BALAYAGE, DE MISE EN RÉSEAU, D'AFFICHAGE ET D'ENTRÉE

(30) Priority: 28.02.2014 US 201461946292 P; 19.05.2014 US 201414281416
(43) Date of publication of application: 04.01.2017
(73) Proprietor: Fipak Research And Development Company, Rowley, MA 01969 (US)
(72) Inventor: HAUVILLE, Stephan, Byfield, MA 01922 (US); HAUVILLE, Antoine, 76500 La Londe (FR)
(74) Representative: Küchler, Stefan
(86) International application number: PCT/US2015/018260
(87) International publication number: WO 2015/131175

(56) References cited:
- JP-A- 2011 052 851
- US-A1- 2005 278 047
- US-A1- 2007 032 225
- US-A1- 2012 064 923
- US-A1- 2013 073 431
- US-A1- 2013 268 127
- US-A1- 2014 018 940
- US-B2- 8 150 387
- US-B2- 8 282 002

## Description

### Field Of The invention

This invention relates to methods and apparatus for ensuring air quality in a building. Among other things, this invention relates to methods and apparatus for handling air in a laboratory space (or other building space) where the presence of noxious substances (e.g., hazardous chemicals) would normally require an increased rate of air exchanges for that laboratory space (or other building space) in order to ensure the comfort and/or safety of the occupants. This invention also relates to methods and apparatus for controlling a working device using a handheld unit having scanning, networking, display and input capability.

### Background Of The invention

Modern building codes require that the air in a room of a building be circulated a minimum number of times in a given period of time in order to ensure the comfort and/or safety of the occupants, e.g., it is common for modern building codes to require a minimum of 2-4 air exchanges per hour for each room of the building.

However, in some areas of some buildings (e.g., laboratory spaces, hospital spaces, anatomy labs, animal care facilities, utility rooms containing heating systems and the like, garages, locker rooms, etc.), the presence of noxious substances (e.g., hazardous chemicals) may require a higher rate of air exchanges in order to ensure the comfort and/or safety of the occupants.

By way of example but not limitation, in a laboratory space where chemicals are handled on the open bench, without the protection of a fumehood, a higher rate of air exchanges (e.g., 8-12 air exchanges per hour) may be mandated in order to ensure the comfort and/or safety of the occupants. This higher rate of air exchanges is in addition to, and is not a substitute for, any fumehoods which may be provided in the laboratory space.

It will be appreciated that the higher rate of air exchanges for these laboratory spaces, while extremely important for the comfort and/or safety of the occupants, are nonetheless expensive due to the energy loss associated with the air exchange process. More particularly, the air exchanges are typically effected using the ambient air outside the building, and this outside ambient air must generally be conditioned (e.g., heated or cooled) before it is introduced into the laboratory space as replacement air for the laboratory space. This heating or cooling consumes energy, and energy is expensive. This is particularly true in colder and warmer climates, since more heating or cooling must be effected for the ambient outside air prior to introducing that air into the laboratory space as replacement air.

In view of this, it will be appreciated that energy costs are significantly higher for laboratory spaces (and/or other building spaces) which require an increased rate of air exchanges (e.g., 8-12 air exchanges per hour) than for those rooms which do not require an increased rate of air exchanges (e.g., only 2-4 air exchanges per hour).

Thus there is a need for a new approach for handling air in a laboratory space (and/or other building spaces) which would normally require an increased rate of air exchanges (e.g., 8-12 air exchanges per hour), in order to reduce the energy losses associated with the increased rate of air exchanges.

In addition, working devices for ensuring air quality in a building typically require an on-board display screen for allowing a user to operate the working device. However, such on-board display screens generally increase the cost of the working device. Thus, there is also a need for a new approach for controlling a working device without requiring that the working device have an on-board display screen in order to reduce the cost of the working device.

In addition, many other types of working devices typically require an on-board display screen for allowing a user to operate the working device. However, such on-board display screens generally increase the cost of these working device. Thus, there is also a need for a new approach for controlling other types of working devices without requiring that the working device have an on-board display screen in order to reduce the cost of the working device.

The document US 2013/0268127 A1 discloses an approach for the configuration of a controller in a building automation system using a code that may be generated by the building automation system, but accessed without a network connection. Especially, this document discloses an exemplary topology diagram for a building automation system having an environmental control access panel. Furthermore, although the building automation system enables one or more of the environmental settings in a building automation system to be adjused based on human actions, without a network connection between the mobile computing device and the building automation system. In US 2013/0268127 A1, it is explained that once the desired settings are set in the application via a user, a machine readable code is generated and displayed on the mobile computing device. That code is then presented to a reader that is connected to the building automation system. The reader reads the code and the building automation system, decodes the data contained in the code and adjusts the environmental controls accordingly for a location located by the reader or encoded in the code. This procedure cannot be automated because of the step that the code generated and displayed on the mobile computing device has to be presented to a reader that is connected to the building automation system. This presentation has to be conducted manually. A person has to hold the mobile computing device rather near to a reader of the building automation system.

From these drawbacks of the state of the art results the problem to be solved by the present invention, namely to find a new approach for controlling a working device which does not suffer from such drawbacks.

### Summary Of The Invention

According to the invention, there is provided a method according to claim 1 and a system according to claim 8. The sub-claims forming alternative embodiments of the invention.

### Brief Description Of The Drawings

These and other objects and features of the present invention will be more fully disclosed or rendered obvious by the following detailed description of the preferred embodiments of the invention, which is to be considered together with the accompanying drawings wherein like numbers refer to like parts, and further wherein:
- Fig. 1: is a schematic view of a novel air treatment device formed in accordance with the present invention;
- Fig. 2: is a schematic view of one preferred filter which may be used in the novel air treatment device shown in Fig. 1;
- Fig. 3: is a schematic view of another novel air treatment device formed in accordance with the present invention;
- Fig. 4: is a schematic view of still another novel air treatment device formed in accordance with the present invention;
- Figs. 5-8: are schematic views of yet another novel air treatment device formed in accordance with the present invention;
- Figs. 9-17: are schematic views of another novel air treatment device formed in accordance with the present invention;
- Fig. 18: is a schematic view showing another novel air treatment device formed in accordance with the present invention, wherein the novel air treatment device comprises an on-board display screen;
- Fig. 19: is a schematic view showing another novel air treatment device formed in accordance with the present invention, wherein the novel air treatment device omits an on-board display screen and instead provides the novel air treatment device with a device-specific QR code;
- Figs. 20 and 21: are schematic views showing the device-specific QR code being generated for a novel air treatment device; and
- Fig. 22: is a schematic view showing the device-specific QR code being used in order to allow a handheld unit having scanning, networking, display and input capability to communicate with and control the working device.

### Detailed Description Of The Preferred Embodiments

### Method And Apparatus For Transforming The Air Exchange Load Of A Higher Air Exchange Space Into The Air Exchange Load Of A Lower Air Exchange Space

There is provided a new approach for handling air in a laboratory space (and/or other building spaces) which would normally require an increased rate of air exchanges (e.g., 8-12 air exchanges per hour), in order to reduce the energy losses associated with the increased rate of air exchanges.

More particularly, there is provided a novel air treatment device which purges noxious substances (e.g., hazardous chemicals) from the air of a laboratory space (and/or other building spaces such as hospital spaces, anatomy labs, animal care facilities, utility rooms containing heating systems and the like, garages, locker rooms, etc.). The novel air treatment device is installed in a laboratory space (and/or other building spaces) which would normally require an increased rate of air exchanges (e.g., 8-12 air exchanges per hour) in order to allow the laboratory space (and/or other building spaces) to be operated at a reduced rate of air exchanges (e.g., 2-4 air exchanges per hour) while still ensuring the comfort and safety of the occupants. Thus, by using the novel air treatment device of the present invention in a laboratory space (and/or other building spaces) which would normally require an increased rate of air exchanges, the rate of air exchanges for the laboratory space (and/or other building spaces) may be reduced, whereby to reduce the energy losses associated with the air exchange process.

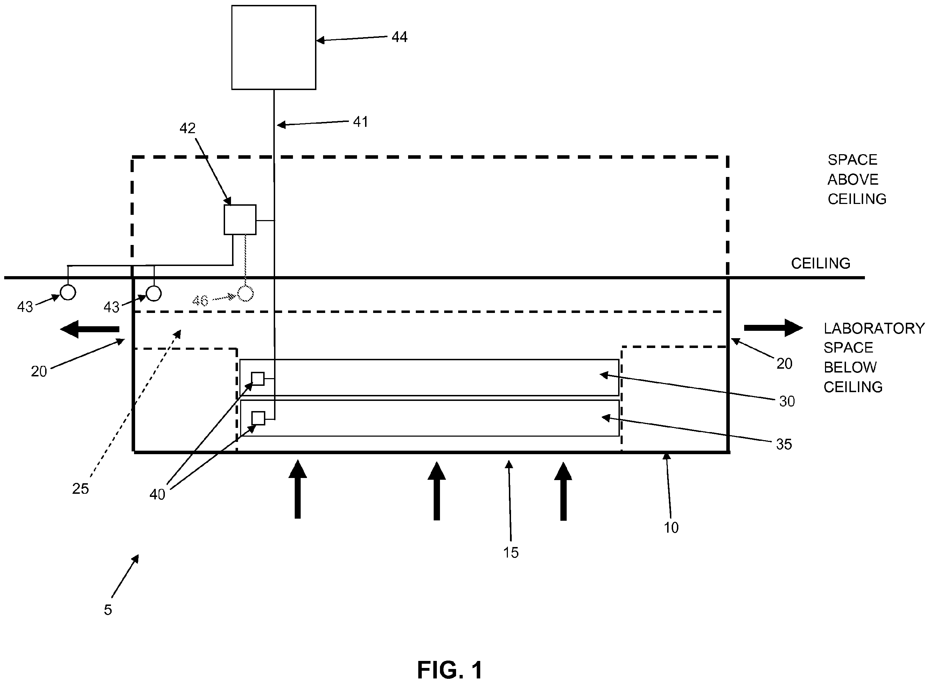

Looking now at Fig. 1, there is provided a novel air treatment device 5 which comprises a housing 10 which is preferably secured to the ceiling of a laboratory space (and/or other building spaces such as hospital spaces, anatomy labs, animal care facilities, utility rooms containing heating systems and the like, garages, locker rooms, etc.). Housing 10 defines an air inlet 15, at least one air outlet 20, and a passageway 25 extending through housing 10 and connecting air inlet 15 with the at least one air outlet 20. A circulation fan 30 is disposed in passageway 25 so as to draw the air of a laboratory space (and/or other building spaces such as hospital spaces, anatomy labs, animal care facilities, utility rooms containing heating systems and the like, garages, locker rooms, etc.) into air inlet 15, move that air through passageway 25, and then return that air to the laboratory space (and/or other building spaces such as hospital spaces, anatomy labs, animal care facilities, utility rooms containing heating systems and the like, garages, locker rooms, etc.) through the at least one air outlet 20. Air inlet 15, the at least one air outlet 20, passageway 25 and circulation fan 30 are configured so as to ensure that substantially all of the air in a given space is circulated through novel air treatment device 5 on a regular and frequent basis.

Novel air treatment device 5 includes a filter 35 which is adapted for purging noxious substances (e.g., hazardous chemicals) from air. More particularly, filter 35 is disposed in passageway 25 so that air from a laboratory space (and/or other building spaces such as hospital spaces, anatomy labs, animal care facilities, utility rooms containing heating systems and the like, garages, locker rooms, etc.), passing through passageway 25, is filtered by filter 35, whereby to remove noxious substances (e.g., hazardous chemicals) from the air of the laboratory space (and/or other building spaces). Thus, novel air treatment device 5 draws in the air of the laboratory space (and/or other building spaces), filters that air so as to purge noxious substances (e.g., hazardous chemicals) from the air, and then returns the filtered air back to the laboratory space (and/or other building spaces), with substantially no loss of air and, significantly, with substantially no change in the heat content of the air.

As a result, inasmuch as novel air treatment device 5 removes noxious substances (e.g., hazardous chemicals) from the air of the laboratory space (and/or other building spaces such as hospital spaces, anatomy labs, animal care facilities, utility rooms containing heating systems and the like, garages, locker rooms, etc.), the rate of air exchanges for that laboratory space (and/or other building spaces) may be reduced from the increased rate of air exchanges (e.g., 8-12 air exchanges per hour) normally associated with that laboratory space (and/or other building spaces) to the "normal" rate of air exchanges (e.g., 2-4 air exchanges per hour) for a standard room in the building. In this way, the air exchange rate for a laboratory space (and/or other building spaces) which would traditionally require a higher rate of air exchanges (e.g., 8-12 air exchanges per hour) may be reduced to that of a room requiring a standard rate of air exchanges (e.g., 2-4 air exchanges per hour), whereby to significantly reduce the energy losses associated with the air exchanges.

In essence, novel air treatment device 5 effectively transforms the "air exchange load" of a "higher air exchange rate space" (e.g., one requiring 8-12 air exchanges per hour) into the "air exchange load" of a "lower air exchange rate space" (e.g., one requiring 2-4 air exchanges per hour), whereby to significantly reduce the energy losses associated with the air exchange process, while still ensuring the comfort and/or safety of the occupants.

Significantly, in addition to providing a reduction in the energy losses associated with the air exchange process, novel air treatment device 5 also provides higher quality air for the occupants of the laboratory space (and/or other building spaces such as hospital spaces, anatomy labs, animal care facilities, utility rooms containing heating systems and the like, garages, locker rooms, etc.). This is because novel air treatment device 5 actively purges noxious substances (e.g., hazardous chemicals) from the air of the laboratory space (and/or other building spaces), rather than simply diluting them with an increased rate of air exchange.

As discussed above, filter 35 is designed to purge noxious substances (e.g., hazardous chemicals) from the laboratory space air. More particularly, filter 35 is configured to remove chemicals from the air of the laboratory space, wherein those chemicals may comprise non-particulates, including fumes, vapors, volatiles, etc. In one preferred form of the invention, filter 35 is configured to remove at least one of solvents, acids and bases from the air of the laboratory space. In one particularly preferred form of the invention, filter 35 is configured to remove at least two of solvents, acids and bases from the air of the laboratory space.

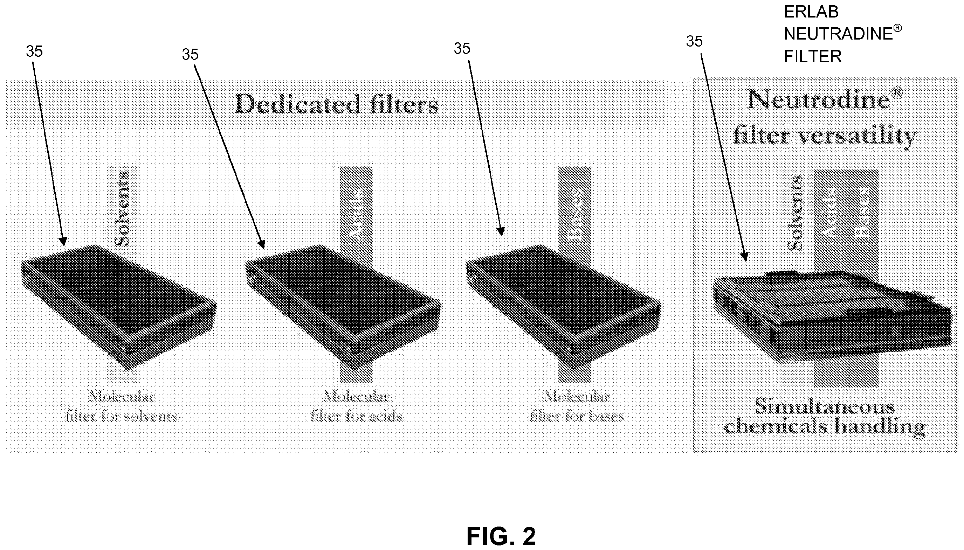

Filter 35 may be of the sort commonly utilized in ductless fumehoods. Preferably filter 35 is a Neutrodine^{®} filter of the sort sold by Erlab of Rowley, Massachusetts, USA (see Fig. 2), which is a cassette-based, multi-stage filter capable of simultaneously handling a multitude of different chemical families, e.g., solvents, acids and bases. If filter 35 is not a cassette-based, multi-stage filter, it may comprise several independent filters arranged in series so as to ensure effective purging of noxious substances (e.g., hazardous chemicals).

It will be appreciated that one or more novel air treatment devices 5 may be used for each laboratory space (and/or other building spaces such as hospital spaces, anatomy labs, animal care facilities, utility rooms containing heating systems and the like, garages, locker rooms, etc.), depending upon the size of the laboratory space (and/or other building spaces) and the capacity of novel air treatment device 5. Thus, for example, in a typical chemistry laboratory of 1000 square feet, five novel air treatment devices 5 may be provided to service the laboratory space.

Preferably, novel air treatment device 5 includes one or more sensors 40 (Fig. 1) for monitoring proper function of the operational elements of the novel air treatment device (e.g., circulation fan 30 and filter 35, etc.), and these sensors 40 are preferably connected (e.g., by wire or wireless communication 41) to a monitoring system 42 for activating an alarm 43 (e.g., an audible alarm and/or a visual, light-based alarm) in the event that proper function of the operational elements (e.g., circulation fan 30 and filter 35, etc.) is interrupted.

Alternatively, or additionally, sensors 40 may be connected (e.g., by wire or wireless communication 41) to the master air control system 44 for the building. In the event that proper function of one or more of the operational elements (e.g., circulation fan 30, filter 35, etc.) of one or more novel air treatment device(s) 5 is interrupted, master air control system 44 for the building can automatically increase the rate of air exchanges for the affected laboratory space (and/or other building spaces such as hospital spaces, anatomy labs, animal care facilities, utility rooms containing heating systems and the like, garages, locker rooms, etc.), e.g., from the "normal" rate of air exchanges (e.g., 2-4 air exchanges per hour) to the higher rate of air exchanges (e.g., 8-12 air changes per hour), whereby to ensure the comfort and/or safety of the occupants of that laboratory space (and/or other building spaces).

Novel air treatment device 5 can be mounted to the ceiling of the laboratory space (and/or other building spaces such as hospital spaces, anatomy labs, animal care facilities, utility rooms containing heating systems and the like, garages, locker rooms, etc.), so that the novel air treatment device does not interfere with normal space function and has ready access to the air in the laboratory space (and/or other building spaces). Note that where the laboratory space (and/or other building spaces) has a "drop-down" ceiling, a portion of novel air treatment device 5 may protrude up into the region above the "drop-down" ceiling.

Alternatively, novel air treatment device 5 may be configured to be mounted to a wall of the laboratory space (and/or other building spaces), or to both the ceiling and a wall of the laboratory space (and/or other building spaces).

Also, novel air treatment device 5 can be free-standing, e.g., housing 10 may be mounted to a base which sits on the floor of the laboratory space (and/or other building spaces).

Significantly, such equipment can be used for a new approach for monitoring the air quality in a building, and particularly for monitoring the air quality in building spaces where noxious substances (e.g., hazardous chemicals) may be present, and for advising personnel in the event of possible issues with the air quality in those spaces. To this end, novel air treatment device 5 preferably further comprises a sensor 46 for monitoring the air quality of the ambient air in the laboratory space (and/or other building spaces). Sensor 46 is preferably connected (e.g., by wire or wireless communication 41) to monitoring system 42 for activating alarm 43 (e.g., an audible alarm and/or a visual light-based alarm) in the event that the air quality of the ambient air in the laboratory space (and/or other building spaces) should deteriorate below a predetermined air quality level.

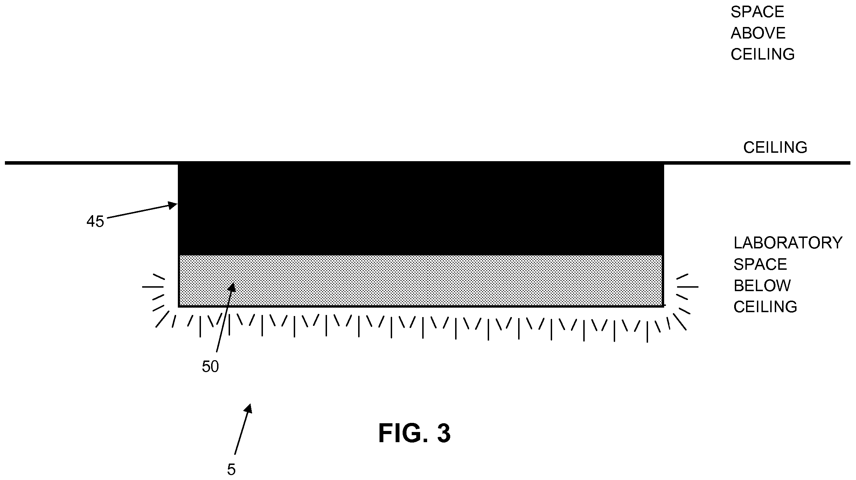

If desired, in order to give novel air treatment device 5 a "weightless" appearance on the ceiling of the laboratory space (and/or other building spaces), and looking now at Fig. 3, novel air treatment device 5 may have a dark base 45 at the portions where it attaches to the ceiling of the laboratory space (and/or other building spaces), and a band of light 50 set about the perimeter portion of novel air treatment device 5 which projects into the laboratory space (and/or other building spaces). This band of light 50 may be purely decorative, e.g., it may be a light blue light to create a desired ambience for the laboratory space (and/or other building spaces); or the band of light 50 may be functional, e.g., it may be a "white" light to provide illumination for the laboratory space (and/or other building spaces).

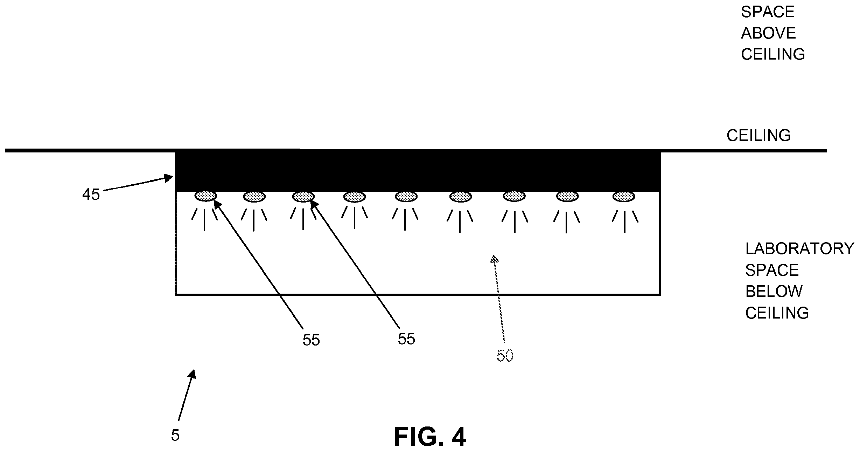

Furthermore, this band of light 50 may comprise a continuous band of light such as is shown in Fig. 3, or it may comprise an interrupted band of light created by a plurality of point sources 55 (e.g., LED lights) such as is shown in Fig. 4.

In addition, if desired, band of light 50 may be informational, e.g., band of light 50 may have one color (e.g., blue) if novel air treatment device 5 is functioning properly and/or if the air quality of the ambient air in the laboratory space (and/or other building spaces) remains above a predetermined air quality level; and band of light 50 may have another color (e.g., red) if the novel air treatment device is not functioning properly and/or if the air quality of the ambient air in the laboratory space (and/or other building spaces) deteriorates below a predetermined air quality level. Thus, in this form of the invention, band of light 50 may serve the same purpose as a visual, light-based alarm 43 (and, in this form of the invention, band of light 50 may be controlled by monitoring system 42, which is connected to sensors 40 and sensors 46).

In one preferred form of the invention, novel air treatment device 5 has its sensors 40 and sensors 46 connected to monitoring system 42, and monitoring system 42 is connected to a visual alarm 43 and/or band of light 50, and monitoring system 42 is programmed to change the state of alarm 43 and/or band of light 50, in the event that (i) the operational elements (e.g., circulation fan 30, filter 35, etc.) of novel air treatment device 5 are not functioning properly, or (ii) the air quality of the ambient air in the laboratory space (and/or other building spaces) should deteriorate below a predetermined air quality level. In this way, a person located in the laboratory space (and/or other building spaces) will know, simply by observing the state of alarm 43 and/or band of light 50, if the novel air treatment device requires servicing (e.g., to change a depleted filter 35, etc.) and/or if the air quality of the ambient air in the laboratory space (and/or other building spaces) has deteriorated below a predetermined air quality level. In this respect it will also be appreciated that, by placing novel air treatment device 5 on the ceiling of the laboratory space (and/or other building spaces), and by extending band of light 50 about the entire perimeter of housing 10 (or at least substantial portions thereof), a person located substantially anywhere in the laboratory space (and/or other building spaces) will generally have a direct line of sight to band of light 50 of novel air treatment device 5, whereby to be quickly and easily informed as to the operational status of novel air treatment device 5 and the air quality of the ambient air in the laboratory space (and/or other building spaces).

Alternatively, and/or additionally, novel air treatment device 5 may be configured so that band of light 50 may be continuously on if novel air treatment device 5 is functioning properly, and blinking if the novel air treatment device is not functioning properly.

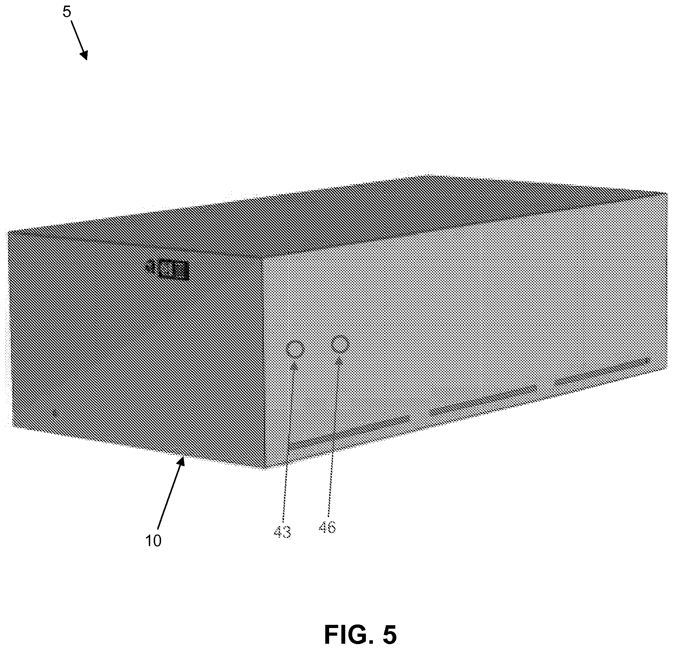

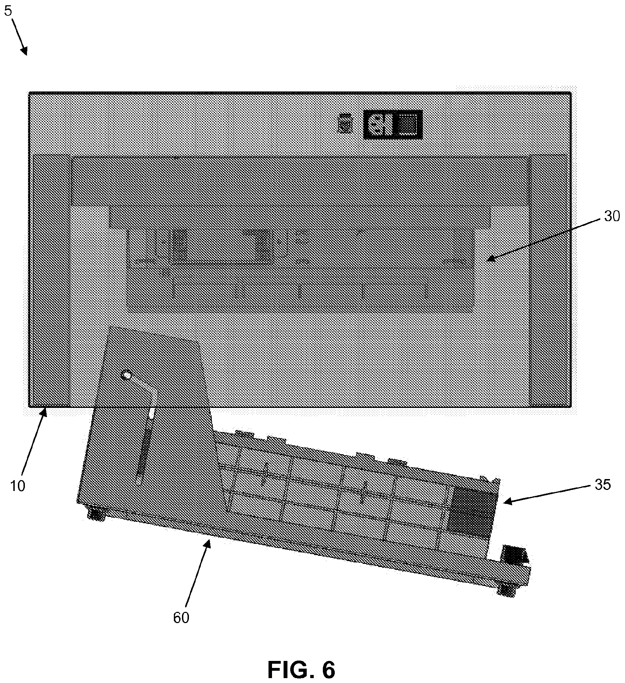

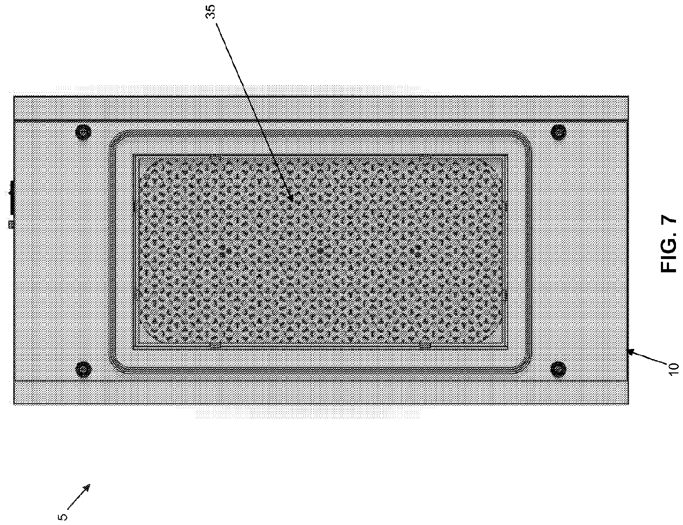

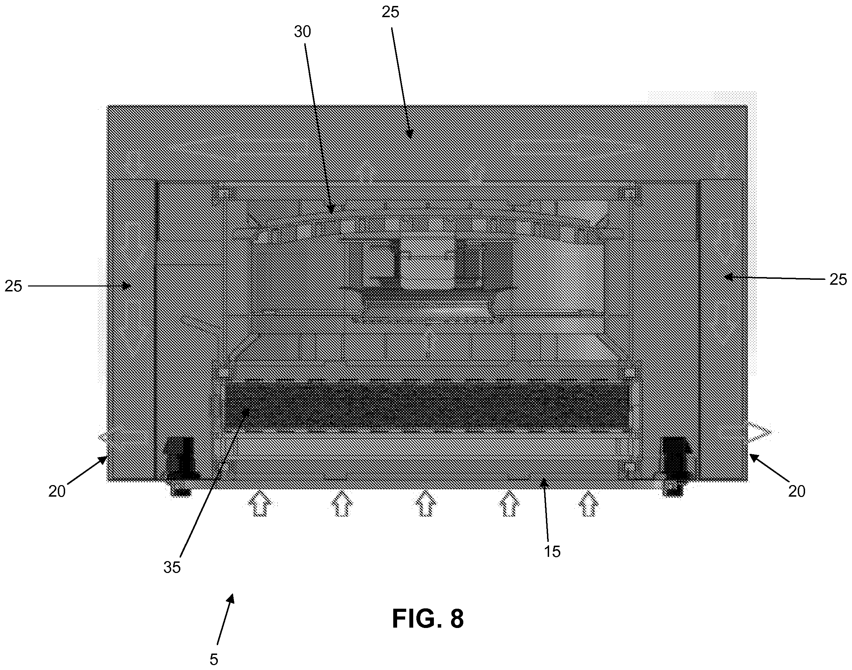

Figs. 5-8 show another preferred construction for novel air treatment device 5. In the construction shown in Figs. 5-8, filter 35 is received in a "drop down" tray 60 which is hingedly connected to housing 10, i.e., when filter 35 is to be replaced, "drop down" tray 60 is lowered from housing 10, a new filter 35 is loaded, and then "drop down" tray 60 is reset into housing 10.

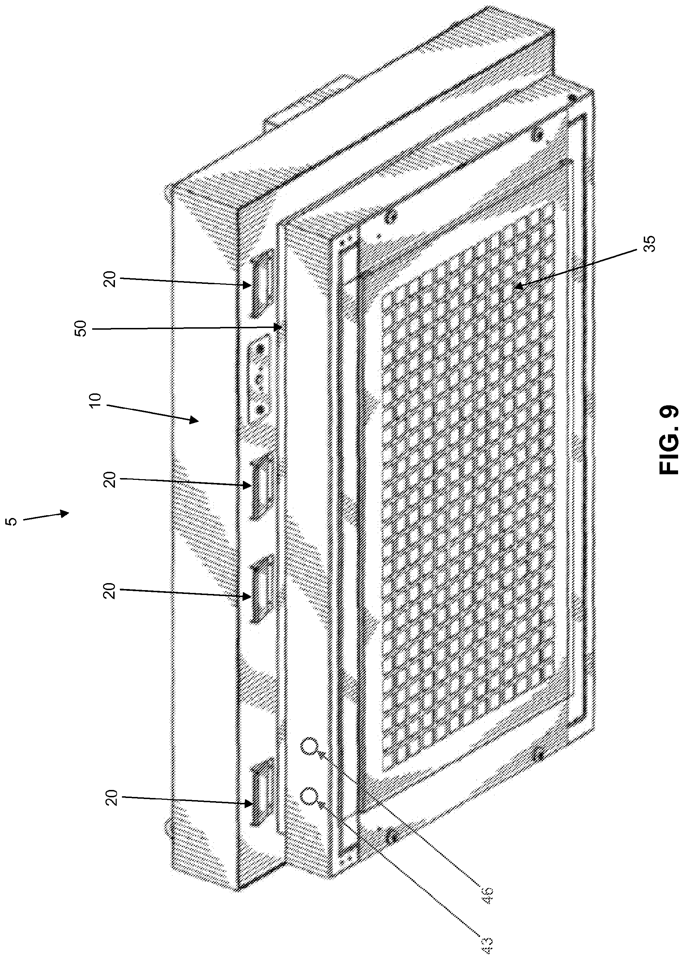

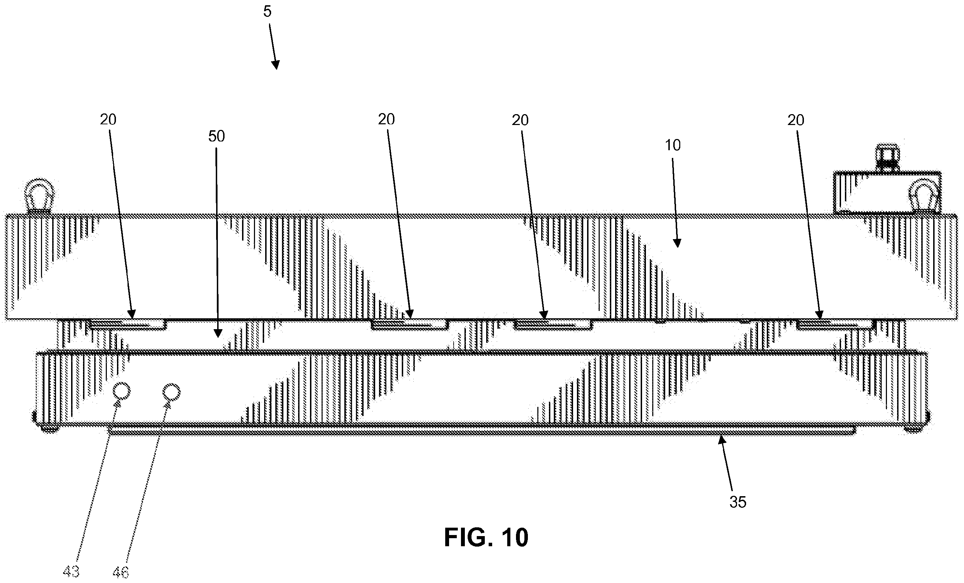

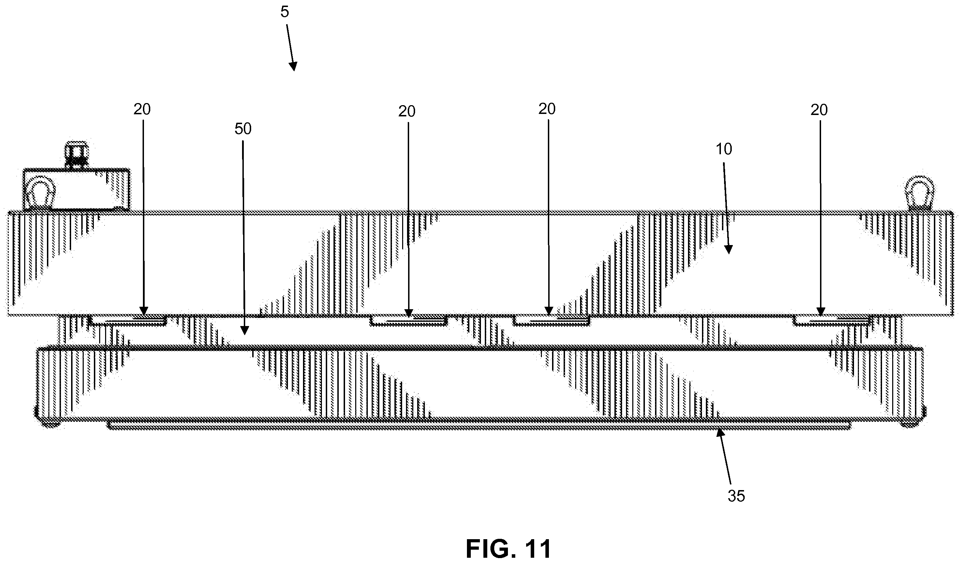

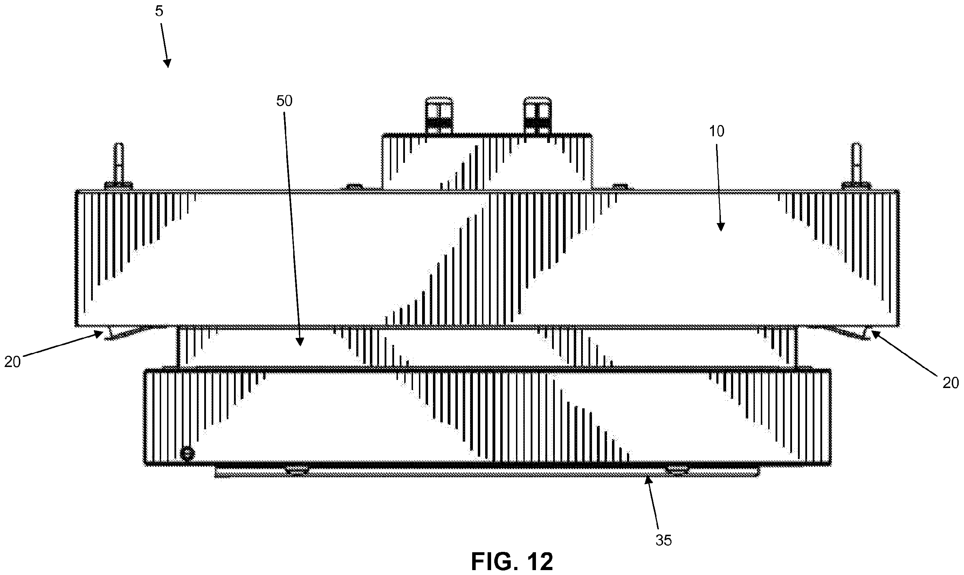

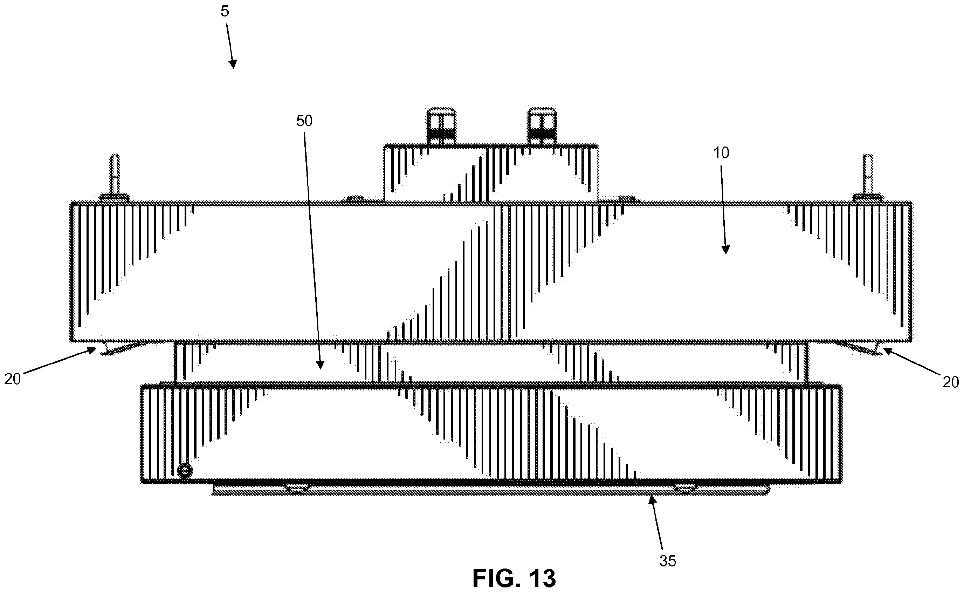

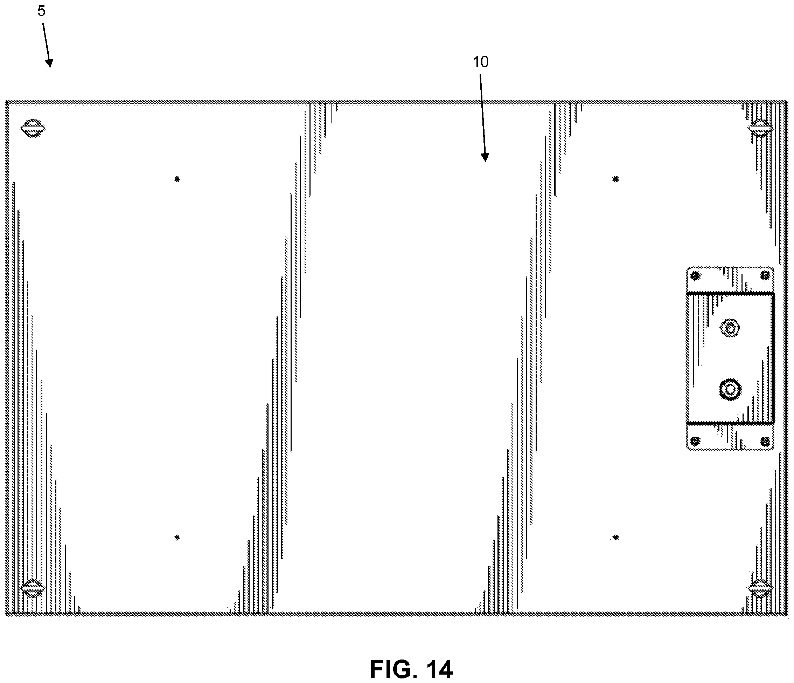

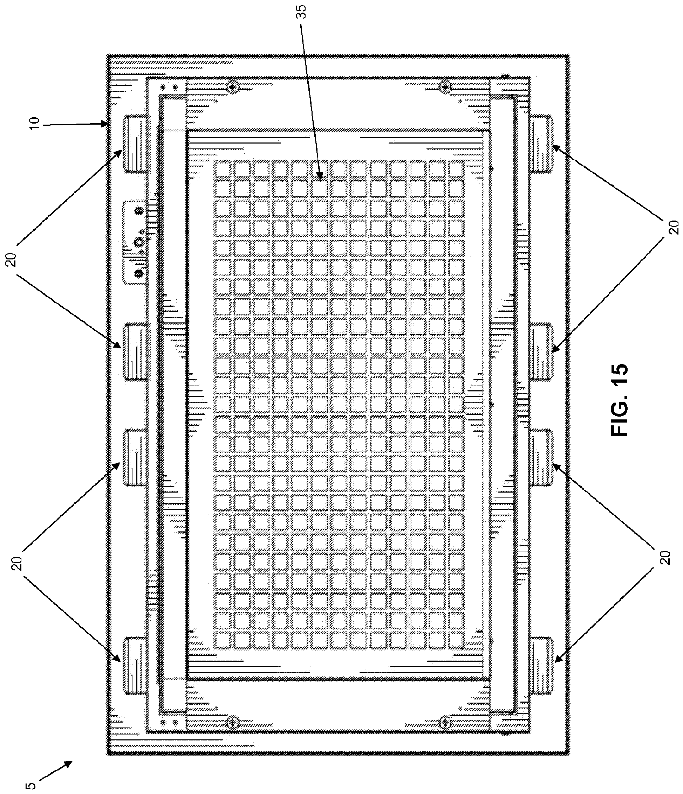

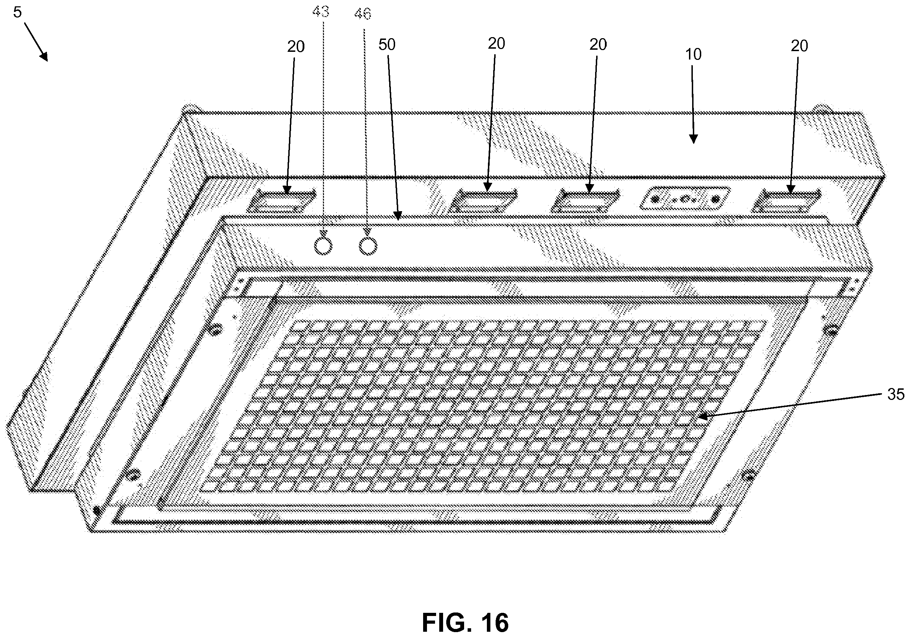

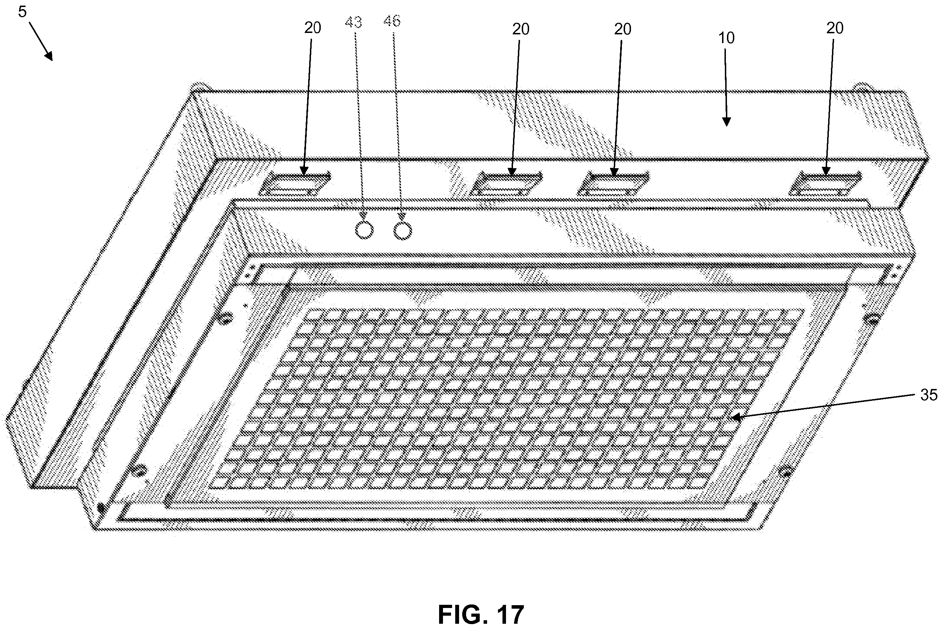

Figs. 9-17 show still another preferred construction for novel air treatment device 5.

### Method And Apparatus For Controlling Air Treatment Device 5 Using A Handheld Unit Having Scanning, Networking, Display And input Capability

In the preceding section, there is disclosed a novel air treatment device 5 for handling air in a laboratory space, where the laboratory space would normally require an increased rate of air exchanges (e.g., 8-12 air exchanges per hour) in order to ensure the comfort and/or health of the occupants, but with the provision of novel air treatment device 5, the rate of air exchanges for the laboratory space may be reduced (e.g., to 4 air exchanges per hour), whereby to reduce the energy losses associated with the air exchange process.

As noted above, novel air treatment device 5 may be connected (e.g., by wire or wireless communication) to a monitoring system (e.g., in the laboratory building or off-site) for activating an alarm in the event that proper function of the operational elements of novel air treatment device 5 (e.g., circulation fan 30, filter 35, etc.) is interrupted.

As also noted above, novel air treatment device 5 may be connected to master air control system 44 for the laboratory building such that, in the event that proper function of the operational elements of novel air treatment device 5 (e.g., circulation fan 30, filter 35, etc.) is interrupted, master air control system 44 for the laboratory building can automatically increase the rate of air exchanges provided for that laboratory space, from the previous rate of air exchanges (e.g., 4 air exchanges per hour) to a higher rate of air exchanges (e.g., 8-12 air exchanges per hour).

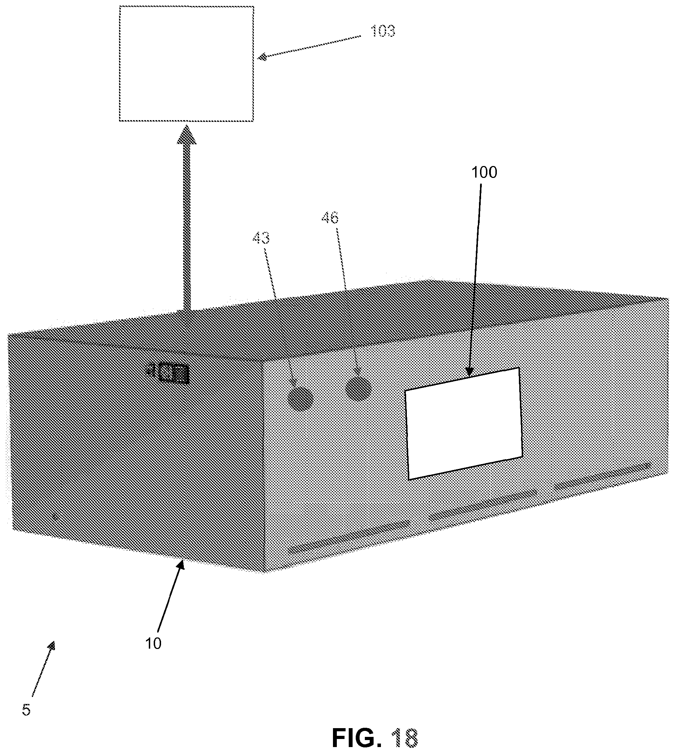

According to the present invention, and looking now at Fig. 18, novel air treatment device 5 may comprise an on-board display screen 100 for displaying information relating to novel air treatment device 5 (e.g., the on/off status of circulation fan 30, the high/medium/low operating speed of circulation fan 30, the functional/non-functional status of filter 35, the remaining useful life of filter 35, etc.). On-board display screen 100 may be a "passive" display screen or, if desired, on-board display screen 100 may be a touchscreen display such that operational commands can be provided to novel air treatment device 5 via on-board display screen 100.

As novel air treatment device 5 is connected (by wire or wireless communication) to a central control system 103 (e.g., in the laboratory building or off-site), central control system 103 may be used to monitor the status of novel air treatment device 5 and/or to provide operational commands to novel air treatment device 5. By way of example but not limitation, novel air treatment device 5 may be connected (by wire or wireless communication) to a central control system 103 located within the laboratory building. By way of further example but not limitation, novel air treatment device 5 may be connected (by wire or wireless communication) to a central control system 103 located off-site, e.g., novel air treatment device 5 may be connected via the Internet to a central control system 103 located thousands of miles away from novel air treatment device 5. In still another form of the present invention, central control system 103 may be incorporated directly into novel air treatment device 5. In this respect it will be appreciated that having the central control system within novel air treatment device 5 offers the advantage of having a complete standalone and autonomous working device which acts as its own web server platform embedded right into the working device's own central processing unit which allows, once the QR code is scanned (see below), a handheld device to take full control of that working device which, in the end, may or may not have to rely solely on central servers located either inside or outside the building.

In connection with the foregoing, it should be appreciated that a plurality of novel air treatment devices 5 (located at one or more locations) may be connected to a single central control system 103 or to multiple central control systems 103.

As noted above, the provision of an on-board display screen 100 generally increases the cost of novel air treatment device 5.

To address this, the present invention provides a new approach for controlling novel air treatment device 5 without requiring that novel air treatment device 5 have an on-board display screen. This is achieved by the provision and use of a novel system which enables the novel air treatment device 5 to be controlled using a handheld unit having scanning, networking, display and input capability.

According to the present invention, novel air treatment device 5 is connected to a central control system 103 (e.g., a central server) via the Internet, and novel air treatment device 5 is provided with a device-specific QR code. In this form of the invention, novel air treatment device 5 may omit an on-board display screen 100, and the novel air treatment device 5 may be controlled using a handheld unit having scanning, networking, display and input capability.

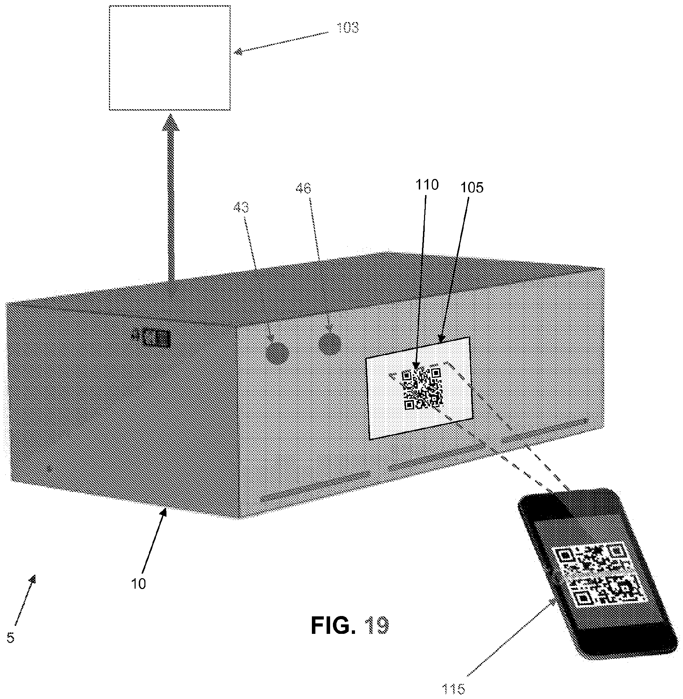

More particularly, in this form of the invention, and looking now at Fig. 19, novel air treatment device 5 is connected (e.g., by wire or wireless communication) to a central control system 103 (e.g., a central server) via the Internet, and novel air treatment device 5 is provided with a label 105 carrying a device-specific QR code 110 which is capable of being machine-read (e.g., scanned) by a handheld unit 115 having scanning, networking, display and input capability (e.g., a smartphone, a tablet, a smartwatch, smart glasses, a laptop, etc.). In this form of the invention, novel air treatment device 5 reports its operational status (e.g., the on/off status of circulation fan 30, the high/medium/low operating speed of circulation fan 30, the functional/non-functional status of filter 35, the remaining useful life of filter 35, etc.) to central control system 103 (e.g., a central server) via the Internet. Central control system 103 (e.g., a central server) can then monitor novel air treatment device 5 for proper function. Central control system 103 (e.g., a central server) can also provide operational commands to novel air treatment device 5 so as to control operation of novel air treatment device 5. Furthermore, users can access central control system 103 (e.g., a central server) via a network such as the Internet in order to monitor the operational status of novel air treatment device 5 and/or to provide operational commands to novel air treatment device 5.

Significantly, a user located adjacent to novel air treatment device 5 can obtain information relating to novel air treatment device 5 (e.g., the on/off status of circulation fan 30, the high/medium/low operating speed of circulation fan 30, the functional/non-functional status of filter 35, the remaining useful life of filter 35, etc.) even though novel air treatment device 5 lacks an on-board display screen. More particularly, in order to obtain information relating to a specific novel air treatment device 5, the user can simply scan the device-specific QR code 110 associated with that specific novel air treatment device 5 using a handheld unit 115 having scanning, networking, display and input capability (e.g., a smartphone, a tablet, a smartwatch, smart glasses, a laptop, etc.). If desired, the handheld unit 115 can be configured (i.e., by appropriate software) to automatically open a web browser or other application or software for facilitating communication between handheld unit 115 and central control system 103 upon scanning of device-specific QR code 110. The device-specific QR code 110 assigned to that novel air treatment device 5 is then automatically transmitted by the handheld unit 115 to central control system 103 (e.g., the central server), which then pushes the operating information associated with the specific novel air treatment device 5 linked to that device-specific QR code (i.e., the operating information associated with that particular novel air treatment device 5) back to the handheld unit. This operating information for novel air treatment device 5 is then displayed to the user on the display screen of handheld unit 115.

In addition, and significantly, once the device-specific QR code 110 for that particular novel air treatment device 5 has been used to establish a link between the handheld unit 115 and novel air treatment device 5 via central control system 103 (e.g., the central server), the handheld unit can then be used to provide operational commands to the novel air treatment device 5 (i.e., by sending operational commands from handheld unit 115 to central control system 103, which in turn relays those operational commands to the specific novel air treatment device 5).

Thus it will be seen that, in this form of the invention, by linking the handheld unit 115 to a specific novel air treatment device via the device-specific QR code for that particular novel air treatment device, the display screen of a handheld unit 115 having scanning, networking, display and input capability (e.g., a smartphone, a tablet, a smartwatch, smart glasses, a laptop, etc.) effectively becomes the display screen for that novel air treatment device 5. This allows on-board display screen 100 to be omitted from novel air treatment device 5, which can result in substantial cost savings for the manufacturer.

### Example Of Novel Air Treatment Device 5 Incorporating The Aformentioned QR Code Communication Procedure

To start the process of assigning a device-specific QR code 110 to a specific novel air treatment device 5 and linking that specific novel air treatment device 5 to a central control system 103, novel air treatment device 5 is first connected to a network (e.g., the Internet). This requires that a network address (i.e., IP address) be assigned to that novel air treatment device 5, and a device-specific QR code 110 be generated which identifies that specific novel air treatment device 5 and its IP address. To this end, each novel air treatment device 5 is tagged with an initial QR code at the time of manufacture or shipping. At the time of installation, the user scans this initial QR code with a handheld unit 115 having scanning, networking, display and input capability (e.g., a smart phone, a tablet, a smartwatch, smart glasses, a laptop, etc.). Using the scanned initial QR code, the networking interface (e.g., the web browser) of the handheld unit 115 can be used to display an Internet page (i.e., a web page) to the user, where all of the configuration information for novel air treatment device 5 is explained. Among other things, this Internet page explains how to edit and print a device-specific QR code 110 that corresponds to the IP address assigned to that particular novel air treatment device 5. Then, knowing the assigned IP address of the particular novel air treatment device 5, the web page provides a tool to print a device-specific QR code that points to that device's assigned IP address. This device-specific QR code is then mounted to a surface of novel air treatment device 5 (or in the vicinity of novel air treatment device 5). Thereafter, when the device-specific QR code is scanned by a handheld unit 115 having scanning, networking, display and input capability (e.g., a smart phone, tablet, etc.), the networking interface (e.g., the web browser) of the handheld unit 115 is automatically directed to central control system 103 (e.g., the central server), which then displays information about that novel air treatment device 5 on handheld unit 115, and allows control of the different operating parameters of novel air treatment device 5 (e.g., fan speed, sensor settings, etc) via the handheld unit 115.

By way of example but not limitation, the following is one specific example of the setup and operation of the QR code communication procedure for novel air treatment device 5.

### 1. Assign The Device-Specific IP Address To The Novel Air Treatment Device 5.

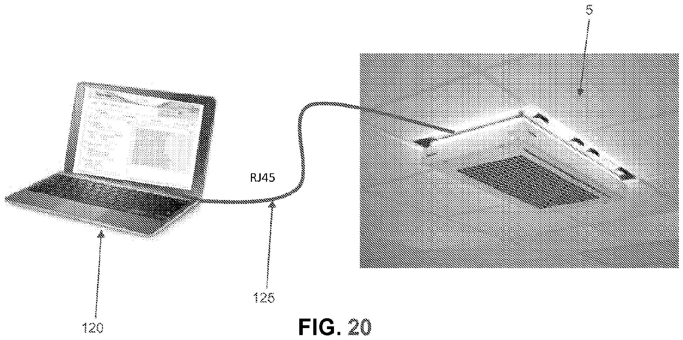

Connect a computer 120 (Fig. 20) directly to a novel air treatment device 5, e.g., with a RJ45 cable 125. This is done by directing the computer's web browser to an appropriate IP address (e.g., 192.168.0.100) so as to access the internal settings of novel air treatment device 5.

Then, in the device "Settings" menu, enter the IP address which is to be assigned to that specific novel air treatment device 5 by the network to which novel air treatment device 5 is connected. Press "Update" to assign the IP Address to that specific novel air treatment device 5.

Press "Reboot" to restart that specific novel air treatment device 5 with the assigned IP address configuration. Disconnect the RJ45 cable from the computer and connect the novel air treatment device 5 to the network.

### 2. Edit And Print The Device-Specific QR Code For That Novel Air Treatment Device 5.

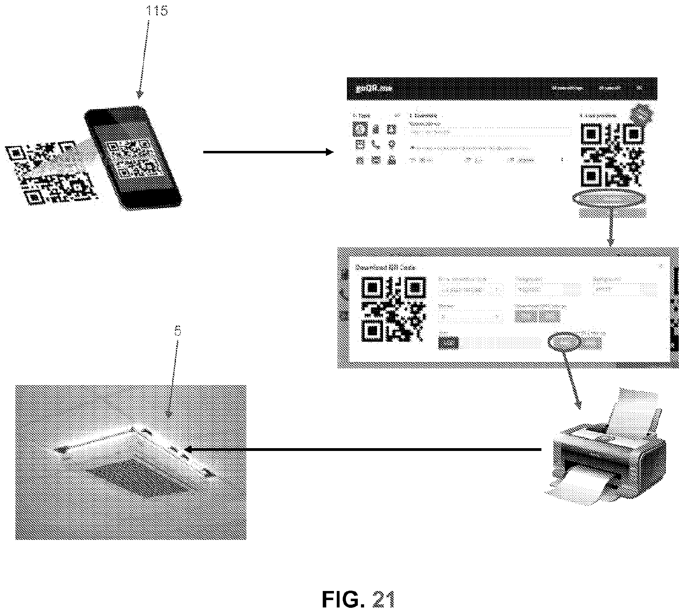

Looking now at Fig. 21, the initial QR code (placed on novel air treatment device 5 at the time of manufacture or shipping) is scanned with a handheld unit 115 having scanning, networking, display and input capability (e.g., a smartphone, a tablet, a smartwatch, smart glasses, a laptop, etc.) and handheld unit 115 connects to an appropriate QR code-generating website (e.g., http://qoqr.me/#t=url).

Enter http:// and the assigned device-specific IP address of that specific novel air treatment device 5 (for example, http://192.168.0.200, which is a default address) in the "Website Address" field.

Click on the "Download" button and then click on the "PNG" button.

Print the generated QR code (e.g., qrcode.png) picture with a minimal size of 2 cm x 2 cm. Mount the generated QR code 110 on novel air treatment device 5 (or close to it).

### 3. Communicate With And Control Novel Air Treatment Device 5.

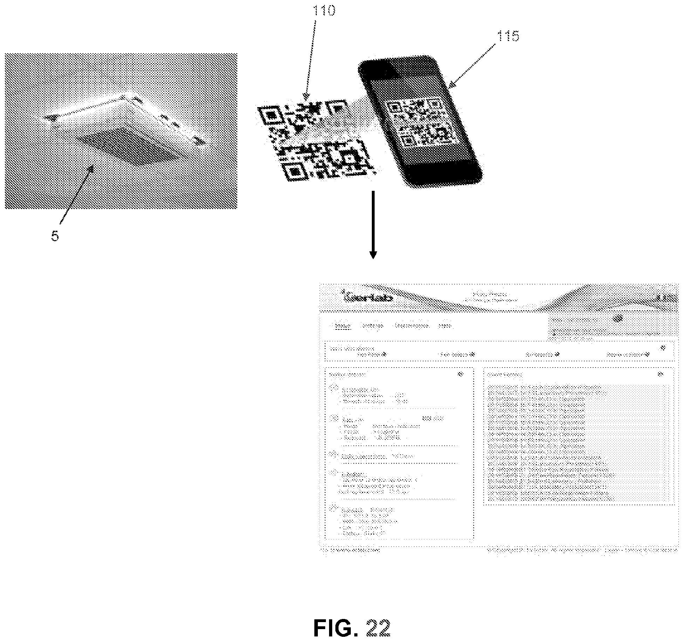

Use a handheld unit 115 having scanning, networking, display and input capability (e.g., a smartphone, a tablet, a smartwatch, smart glasses, a laptop, etc.) to scan the device-specific QR Code 110 (Fig. 22) to automatically access the device-specific information and controls for that specific novel air treatment device 5 via central control system 103 (e.g., the central server). The handheld unit 115 having scanning, networking, display and input capability (e.g., a smartphone, a tablet, a smartwatch, smart glasses, a laptop, etc.) receives the device-specific information and controls for that specific novel air treatment device 5 from central control system 103 (e.g., the central server) and displays information about that particular novel air treatment device 5 on handheld unit 115, and allows the operation (e.g., fan speed, sensor settings, etc.) of that specific novel air treatment device 5 to be set by the user using the handheld unit 115 having scanning, networking, display and input capability (e.g., a smartphone, a tablet, a smartwatch, smart glasses, a laptop, etc.).

### Using The Aforementioned QR Code Communication Procedure To Control Other Working Devices Using A Handheld Unit Having Scanning, Networking, Display And Input Capability

In the preceding sections, there is disclosed a novel QR code communication procedure for allowing a handheld unit having scanning, networking, display and input capability to act in place of the on-board display screen of a novel air treatment device 5. However, it should also be appreciated that the same novel QR code communication procedure can be used to allow a handheld unit having scanning, networking, display and input capability to act in place of the on-board display screen of devices other than a novel air treatment device 5, e.g., the same novel QR code communication procedure can be used to allow a hand-held device to act in place of the on-board display screen of a fumehood, or to act in place of the on-board display screen of other air-handling equipment, or to act in place of the on-board display screen of other working devices. By way of example but not falling under the scope of the claims, such other working devices may comprise a household device (e.g., a television, a refrigerator, a stove or microwave oven, etc.), a vending machine, a ticket kiosk, a manufacturing machine, a robot, a vehicle, etc.

Thus it will be seen that the present creation allows for a simplified human-machine interface which can eliminate the need for traditional on-board display screens and/or controls by providing a fast and simple manner in which an appropriate handheld unit can provide the functionality previously provided by an on-board display screen. When a working device is coupled to a product-supporting server via the novel QR code communication procedure of the present invention, the user can then simply, and automatically, access an information-rich environment via the QR code gateway system (i.e., a QR code accessed central server), using their personal handheld unit having scanning, networking, display and input capability (e.g., their personal smartphone, tablet, smartwatch, smart glasses, laptop, etc.), whereby to obtain information about the working device and/or assume operational control of the working device.

Thus, due to the increasing network connectivity of working devices and the broad adoption of handheld units having scanning, networking, display and input capability (e.g., smartphones, tablets, smartwatches, smart glasses, laptops, etc.), users already have on their person the potential to communicate (via their personal handheld unit) with and control working devices which would normally be provided with an on-board display screen. The advantage is that the working devices can now omit the complex and expensive on-board display screen and/or controls previously required.

With the present invention, every user can use one display screen (i.e., the display screen on their personal handheld unit) to control any number of working devices, and this can be done conveniently, and only when they need it, via the aforementioned QR code communication procedure.

Thus it will be seen that, in one preferred form of the invention, the present invention uses four major technologies which, when combined, act as a system to provide for a universal means for humans to easily interface with, and take full control of, substantially any standalone equipment (i.e., working devices) without having to use built-in display screens, built-in touchscreens and/or built-in keyboards for each working device used. Using this invention can have the positive effect of lowering costs associated with machine development and production while offering users a familiar, simple and standard graphical interface which each user can feel comfortable with, and for a plurality of devices, while increasing the safety of use.

These four major technologies are:
1. A light, preferably a ring of light circling the entire working device, which will act as a simple man-machine interface, equipped on each machine, offering a universal means of visual communication, even for color-blind operators, thereby increasing safety. By way of example but not limitation, when solid, the ring of light tells an observer that the working device is working within the manufacturer's technical parameters and, when flashing (and, optionally, with a corresponding audio alarm) tells an observer that normal operating conditions have changed and therefore requires a user to take full control of that working device.
2. A device-specific QR code label, affixed on the front of the working device which is to be controlled and/or monitored, acting as a simple and universal gateway into the working device via a scanner-equipped handheld unit offering the advantage of automatically linking up to the working device's specific IP address, or other means of bi-directional communication protocol, without having to be previously informed of the working device's specific wireless communication access procedure (e.g., WIFI, RFID, Bluetooth, NFC, etc.).
3. An embedded web service technology directly integrated into the working device allowing the entire control dashboard of the working device to be virtualized in order to be linked up directly to a handheld device screen such as a smartphone, tablet, smartwatch, smart glasses, laptop, etc. Once the handheld unit has scanned the device-specific QR code label affixed to the working device, the user can now bidirectionally, and freely, monitor and/or control that working device, or any other working device equipped with this set of technologies.
4. A handheld unit equipped with an optical recognition apparatus and web browser which, once linked up to the working device's bi-directional control virtual dashboard via a web service, as described above, allows, any user with any optical recognition-equipped handheld device (such as a smartphone, a tablet, a smartwatch, smart glasses, a laptop, etc.) to locally take the control of any working device anywhere via the handheld's device web browser and/or specific program and/or software application ("app", "applet", etc.), allowing a bi-directional control of the working device, thereby rendering unnecessary the provision of traditional embedded screens, touchscreens and/or keyboards on each working device to be controlled.

Thus it will be seen that, since intelligent and powerful personal handheld units is rapidly becoming the norm, the QR code communication procedure of the present invention can be used to take full advantage of these new technologies to universally allow anyone, anywhere, to locally take control of, and/or monitor, substantially any working device as the need arises.

### Modifications

While the present invention has been described in terms of certain exemplary preferred embodiments, it will be readily understood and appreciated by those skilled in the art that it is not so limited, and that many additions, deletions and modifications may be made to the preferred embodiments discussed herein without departing from the scope of the invention.

## Claims

1. A method for wirelessly controlling a working device (5) for the treatment of air by use of a handheld unit (115), said method comprising:
- directly integrating an embedded web service technology into the working device providing an entirely virtualized control dashboard of the working device;
- connecting said working device to a central server via a network, wherein said working device is uniquely identified on said network by an assigned network address, and further wherein said working device and said central server are configured so that said central server can receive data concerning operation of said working device, and control operation of said working device, via said network;
- affixing a QR code label with a machine-readable device-specific identification marker on the front of said working device, wherein said device-specific identification marker identifies the working device and the assigned network address of said working device;
- scanning said device-specific identification marker on said QR code label affixed to the front of said working device with said handheld unit (115), whereby to identify said working device and said assigned network address linked to said working device, and automatically directing the handheld unit (115) to the central server so as to establish a link between the handheld unit (115) and said working device via the central server in order to display information about the working device on the handheld unit (115); and
- using said handheld unit (115) to cause said central server to communicate with and control said working device at said assigned network address, whereby to allow the user to control operation of said working device via the virtualized dashboard of the working device linked up directly to the handheld device screen.

2. A method according to claim 1, wherein said working device comprises a fumehood.

3. A method according to claim 1, wherein said working device is a heating and air conditioning system.

4. A method according to claim 1, wherein said network comprises the Internet or a local area network.

5. A method according to claim 1, wherein said assigned network address comprises an internet protocol (IP) address.

6. A method according to claim 1, wherein said device-specific identification marker comprises a QR code (110).

7. A method according to claim 1, wherein said handheld unit (115) comprises a smartphone, or a tablet, or a smartwatch, or smart glasses.

8. A system comprising:
- a working device (5) for the treatment of air connected to a central server via a network, wherein said working device is uniquely identified on said network by an assigned network address, and further wherein said working device and said central server are configured so that said central server can receive data concerning operation of said working device, and control operation of said working device, via said network, wherein an embedded web service technology is directly integrated into the working device providing an entirely virtualized control dashboard of the working device;
- a QR code label with a machine-readable device-specific identification marker affixed on the front of said working device, wherein said device-specific identification marker identifies the working device and the assigned network address of said working device; and
- a handheld unit (115) having scanning, networking, display and input capability, such that said handheld unit (115) can scan said device-specific identification marker on said QR code label affixed to the front of said working device, automatically connect to said central server via said network, identify said working device and said assigned network address identified with said working device, and automatically establish a link between the handheld unit (115) and said workin device via the central server in order to communicate with and control said working device at said assigned network address, whereby to allow the user to control operation of said working device via the virtualized dashboard of the working device linked up directly to the handheld device screen.

9. A system according to claim 8, wherein said working device comprises a fumehood.

10. A system according to claim 8, wherein said working device is a heating and air conditioning system.

11. A system according to claim 8, wherein said network comprises the Internet.

12. A system according to claim 8, wherein said device-specific identification marker comprises a QR code (110).

13. A system according to claim 8, wherein said handheld unit (115) comprises one of a smartphone and a tablet.

## Patentansprüche

1. Ein Verfahren zur drahtlosen Steuerung einer Arbeitsvorrichtung (5) zur Behandlung von Luft unter Verwendung einer tragbaren Einheit (115), wobei das besagte Verfahren umfasst:
- unmittelbares Integrieren einer eingebetteten Netzwerk-Dienst-Technologie in die Arbeitsvorrichtung, welche für die Arbeitsvorrichtung eine vollständige virtuelle Steuerungs-Armaturentafel bereitstellt;
- Anbinden der besagten Arbeitsvorrichtung an einen zentralen Server über ein Netzwerk, wobei die besagte Arbeitsvorrichtung in dem besagten Netzwerk durch eine zugewiesene Netzwerkadresse eindeutig identifiziert wird, und ferner wobei die besagte Arbeitsvorrichtung und der besagte zentrale Server derart ausgelegt sind, dass der besagte zentrale Server über das besagte Netzwerk Daten empfangen kann, welche die Arbeitsweise der besagten Arbeitsvorrichtung betreffen, und dass er die Arbeitsweise der besagten Arbeitsvorrichtung steuern kann;
- Anbringen eines QR-Code-Etiketts mit einer maschinenlesbaren gerätespezifischen Identifikationsmarkierung auf der Vorderseite der besagten Arbeitsvorrichtung, wobei die besagte gerätespezifische Identifikationsmarkierung die Arbeitsvorrichtung und die zugewiesene Netzwerkadresse der besagten Arbeitsvorrichtung identifiziert;
- Scannen der besagten gerätespezifischen Identifikationsmarkierung auf dem besagten QR-Code-Etikett, welches an der Vorderseite der besagten Arbeitsvorrichtung angebracht ist, mit der besagten tragbaren Einheit (115), um dabei sowohl die besagte Arbeitsvorrichtung als auch die besagte zugewiesene und mit der besagten Arbeitsvorrichtung verknüpfte Netzwerkadresse zu identifizieren, und um die tragbare Einheit (115) automatisch zu dem zentralen Server zu leiten, mit dem Ziel, eine Verbindung zwischen der tragbaren Einheit (115) und der besagten Arbeitsvorrichtung über den zentralen Server herzustellen zum Zwecke der Anzeige von Information über die Arbeitsvorrichtung auf der tragbaren Einheit (115); und
- Verwenden der besagten tragbaren Einheit (115), um den zentralen Server zu veranlassen, mit der besagten Arbeitsvorrichtung unter der besagten zugewiesenen Netzwerkadresse zu kommunizieren und jene zu steuern, wobei es dem Benutzer ermöglicht wird, den Betrieb der besagten Arbeitsvorrichtung über die virtuelle Armaturentafel der besagten Arbeitsvorrichtung zu steuern, welche direkt mit dem tragbaren Gerätebildschirm vernetzt ist.

2. Ein Verfahren gemäß Anspruch 1, wobei die besagte Arbeitsvorrichtung einen Abzugshaube umfasst.

3. Ein Verfahren gemäß Anspruch 1, wobei die besagte Arbeitsvorrichtung ein Heizungs- und Klimatisierungssystem ist.

4. Ein Verfahren gemäß Anspruch 1, wobei das besagte Netzwerk das Internet ist oder ein lokales Netzwerk.

5. Ein Verfahren gemäß Anspruch 1, wobei die besagte zugewiesene Netzwerkadresse eine Internetprotokoll-Adresse (IP-Adresse) umfasst.

6. Ein Verfahren gemäß Anspruch 1, wobei die besagte gerätespezifische Identifikationsmarkierung einen QR-Code umfasst.

7. Ein Verfahren gemäß Anspruch 1, wobei die besagte tragbare Einheit (115) ein Smartphone, oder ein Tablet, oder eine Smartwatch oder eine Smart-Brille umfasst.

8. Ein System, umfassend:
- eine Arbeitsvorrichtung (5) zur Behandlung von Luft, welche über ein Netzwerk mit einem zentralen Server verbunden ist, wobei die besagte Arbeitsvorrichtung in dem Netzwerk durch eine zugewiesene Netzwerkadresse eindeutig identifiziert wird, und ferner wobei die besagte Arbeitsvorrichtung und der besagte zentrale Server derart ausgelegt sind, dass der besagte zentrale Server über das besagte Netzwerk Daten empfangen kann, welche die Arbeitsweise der besagten Arbeitsvorrichtung betreffen, und dass er die Arbeitsweise der besagten Arbeitsvorrichtung steuern kann, wobei eine eingebettete Netzwerk-Dienst-Technologie in die Arbeitsvorrichtung unmittelbar integriert ist, und eine vollkommen virtuelle Armaturentafel der Arbeitsvorrichtung bereitstellt;
- ein an der Vorderseite der besagten Arbeitsvorrichtung angebrachtes QR-Code-Etikett mit einer maschinenlesbaren gerätespezifischen Identifikationsmarkierung, wobei die besagte gerätespezifische Identifikationsmarkierung die Arbeitsvorrichtung und die zugewiesene Netzwerkadresse der besagten Arbeitsvorrichtung identifiziert; und
- eine tragbare Einheit (115) mit einer Abtastungs-, Vernetzungs-, Anzeige- und Eingabefähigkeit, derart, dass die besagte tragbare Einheit (115) die besagten gerätespezifischen Identifikationsmarkierungen auf dem an der Vorderseite der besagten Arbeitsvorrichtung angebrachten QR-Code-Etikett scannen kann, sich mit dem besagten zentralen Server über das besagte Netzwerk automatisch verbinden kann, die besagte Arbeitsvorrichtung sowie die besagte zugewiesene Netzwerkadresse, welche die besagte Arbeitsvorrichtung kennzeichnet, identifizieren kann, und automatisch eine Verbindung zwischen der besagten tragbaren Einheit (115) und der besagten Arbeitsvorrichtung mit der besagten zugewiesenen Netzwerkadresse über den zentralen Server herstellen kann, um mit der Arbeitsvorrichtung zu kommunizieren und um jene zu steuern, wobei es dem Benutzer ermöglicht wird, den Betrieb der besagten Arbeitsvorrichtung mittels der virtuellen Armaturentafel der besagten Arbeitsvorrichtung zu steuern, welche unmittelbar mit dem tragbaren Gerätebildschirm vernetzt ist.

9. Ein System gemäß Anspruch 8, wobei die besagte Arbeitsvorrichtung eine Abzugshaube umfasst.

10. Ein System gemäß Anspruch 8, wobei die besagte Arbeitsvorrichtung ein Heizungs- und Klimatisierungssystem ist.

11. Ein System gemäß Anspruch 8, wobei das besagte Netzwerk das Internet ist.

12. Ein System gemäß Anspruch 8, wobei die besagte gerätespezifische Identifikatiorismarkierung einen QR-Code (110) umfasst.

13. Ein System gemäß Anspruch 8, wobei die besagte tragbare Einheit (115) entweder ein Smartphone oder ein Tablet umfasst.

## Revendications

1. Procédé pour commander sans fil un dispositif de travail (5) pour le traitement de l'air à l'aide d'une unité portable (115), ledit procédé comprenant :
- l'intégration directe d'une technologie de service web intégrée dans le dispositif de travail fournissant un tableau de bord de commande entièrement virtualisé du dispositif de travail ;
- la connexion dudit dispositif de travail à un serveur central par l'intermédiaire d'un réseau, en ce que ledit dispositif de travail est identifié de manière unique sur ledit réseau par une adresse de réseau affectée, et en outre en ce que ledit dispositif de travail et ledit serveur central sont configurés de telle sorte que ledit serveur central peut recevoir des données concernant le fonctionnement dudit dispositif de travail, et commander le fonctionnement dudit dispositif de travail, par l'intermédiaire dudit réseau ;
- l'apposition d'une étiquette de code QR avec un marqueur d'identification spécifique au dispositif lisible par machine sur la face frontale dudit dispositif de travail, en ce que ledit marqueur d'identification spécifique au dispositif identifie le dispositif de travail et l'adresse de réseau affectée dudit dispositif de travail ;
- le balayage dudit marqueur d'identification spécifique au dispositif sur ladite étiquette de code QR apposée sur la face frontale dudit dispositif de travail avec ladite unité portable (115), de manière à identifier ledit dispositif de travail et ladite adresse de réseau affectée liée audit dispositif de travail, et la direction automatique de l'unité portable (115) vers le serveur central de manière à créer un lien entre l'unité portable (115) et ledit dispositif de travail par l'intermédiaire du serveur central en vue d'afficher des informations relatives au dispositif de travail sur l'unité portable (115) ; et
- l'utilisation de ladite unité portable (115) pour amener ledit serveur central à communiquer avec et à commander ledit dispositif de travail à ladite adresse de réseau affectée, de manière à permettre à l'utilisateur de commander le fonctionnement dudit dispositif de travail par l'intermédiaire du tableau de bord virtualisé du dispositif de travail relié directement à l'écran de l'unité portable.

2. Procédé selon la revendication 1, en ce que ledit dispositif de travail comprend une hotte.

3. Procédé selon la revendication 1, en ce que ledit dispositif de travail est un système de chauffage et de climatisation.

4. Procédé selon la revendication 1, en ce que ledit réseau comprend le réseau Internet ou un réseau local.

5. Procédé selon la revendication 1, en ce que ladite adresse de réseau affectée comprend une adresse de protocole internet (IP).

6. Procédé selon la revendication 1, en ce que ledit marqueur d'identification spécifique au dispositif comprend un code QR (110).

7. Procédé selon la revendication 1, en ce que ladite unité portable (115) comprend un smartphone, ou une tablette, ou une montre connectée, ou des lunettes connectées.

8. Système comprenant :
- un dispositif de travail (5) pour le traitement de l'air connecté à un serveur central par l'intermédiaire d'un réseau, en ce que ledit dispositif de travail est identifié de manière unique sur ledit réseau par une adresse de réseau affectée, et en outre en ce que ledit dispositif de travail et ledit serveur central sont configurés de telle sorte que ledit serveur central peut recevoir des données concernant le fonctionnement dudit dispositif de travail, et commander le fonctionnement dudit dispositif de travail, par l'intermédiaire dudit réseau, en ce qu'une technologie de service web intégrée est directement intégrée dans le dispositif de travail fournissant un tableau de bord de commande entièrement virtualisé du dispositif de travail ;
- une étiquette de code QR avec un marqueur d'identification spécifique au dispositif lisible par machine apposée sur la face frontale dudit dispositif de travail, en ce que ledit marqueur d'identification spécifique au dispositif identifie le dispositif de travail et l'adresse de réseau affectée dudit dispositif de travail ; et
- une unité portable (115) ayant une capacité de balayage, de mise en réseau, d'affichage et d'entrée, de telle sorte que ladite unité portable (115) peut balayer ledit marqueur d'identification spécifique au dispositif ou ladite étiquette de code QR apposée sur la face frontale dudit dispositif de travail, se connecter automatiquement audit serveur central par l'intermédiaire dudit réseau, identifier ledit dispositif de travail et ladite adresse de réseau affectée identifiée avec ledit dispositif de travail, et créer automatiquement un lien entre l'unité portable (115) et ledit dispositif de travail par l'intermédiaire du serveur central en vue de communiquer avec et de commander ledit dispositif de travail à ladite adresse de réseau affectée, de manière à permettre à l'utilisateur de commander le fonctionnement dudit dispositif de travail par l'intermédiaire du tableau de bord virtualisé du dispositif de travail relié directement à l'écran de l'unité portable.

9. Système selon la revendication 8, en ce que ledit dispositif de travail comprend une hotte.

10. Système selon la revendication 8, en ce que ledit dispositif de travail est un système de chauffage et de climatisation.

11. Système selon la revendication 8, en ce que ledit réseau comprend l'Internet.

12. Système selon la revendication 8, en ce que ledit marqueur d'identification spécifique au dispositif comprend un code QR (110).

13. Système selon la revendication 8, en ce que ladite unité portable (115) comprend un smartphone et/ou une tablette.
